# EUROPEAN PATENT APPLICATION

(11) **EP 2 571 244 A2**
(43) Date of publication of application: **20.03.2013**
(21) Application number: 12183370.1
(22) Date of filing: 06.09.2012
(51) Int. Cl.: H04N 1/40

(54) **Image processing apparatus, method, image forming apparatus, and storage medium**

(30) Priority: 16.09.2011 JP 2011202741
(71) Applicant: Ricoh Company, Ltd., Tokyo 143-8555 (JP)
(72) Inventor: Sakakibara, Shigetaka, Tokyo, 143-8555 (JP)
(74) Representative: Maury, Richard Philip

(57) **Abstract**

The present invention provides a novel image processing apparatus (200) that facilitates obtaining high-quality image even in low resolution without driving up costs and lowering speed. The image processing apparatus (200) of this invention includes the line width determining unit (202) that determines whether or not line width in image with high resolution is one pixel. The adding unit (204) adds one pixel either above or below the line in image converted to lower resolution and makes the width of the line two pixels.

## Description

### BACKGROUND OF THE INVENTION

### Field of the Invention

The present invention relates to an image processing apparatus, an image processing method, an image forming apparatus, and a storage medium storing a program that changes image resolutions.

### Description of the Related Art

While inkjet recording apparatuses are popular in offices due to reasonable prices and high-quality output images, they have the following issues.

That is, the first issue pertains to the type of paper that can be used. While inkjet recording using specialized inkjet paper can reproduce high-quality images, such paper is expensive. Supporting only specialized inkjet paper can prevent inkjet printers from becoming popular for those uses in which high-quality images are not required.

To use plain paper, inks such as hyposmotic dye ink and pigmented ink as well as auxiliary fixing agents have been developed to be able to record images equivalent in quality to laser printers on plain paper and copier paper.

The second issue is recording speed. In inkjet recording apparatuses, a recording head smaller than the recording paper scans the paper and ejects ink to record in lines, so its recording speed is slower than that of electrophotography, which records in units of pages.

In order to improve this recording speed, methods such as improving scanning speed by boosting ejection frequency, enlarging a recording head, cutting down scanning times by recording bidirectionally, and efficient scanning sequence known as minimal-distance control that scans only where image data is recorded are applied. As a result, some models have achieved recording speeds faster than that of electrophotography for printing small to medium numbers of copies.

However, in serial inkjet recording apparatuses, a high nozzle density in the paper feeding direction (sub-scanning direction) is needed to for high-speed, high-quality printing on plain paper. While various methods to implement high-density nozzles have been proposed, fine processing technology is necessary and that raises the cost of the recording head. By contrast, in case nozzle density in the paper feeding direction (sub-scanning direction) is low, it is necessary to scan multiple times to increase dot density, and that slows recording speed.

For example, in order to obtain images of a resolution sufficient to provide clear edges of text characters and image graphics while retaining overall image smoothness, JP-2008-166983-A proposes a technique involving executing an interpolating process and then an edge emphasizing process on those parts identified as edges of texts and graphics in predefined narrow areas. However, the drawback of this technique is a jagged appearance due to the edge emphasis.

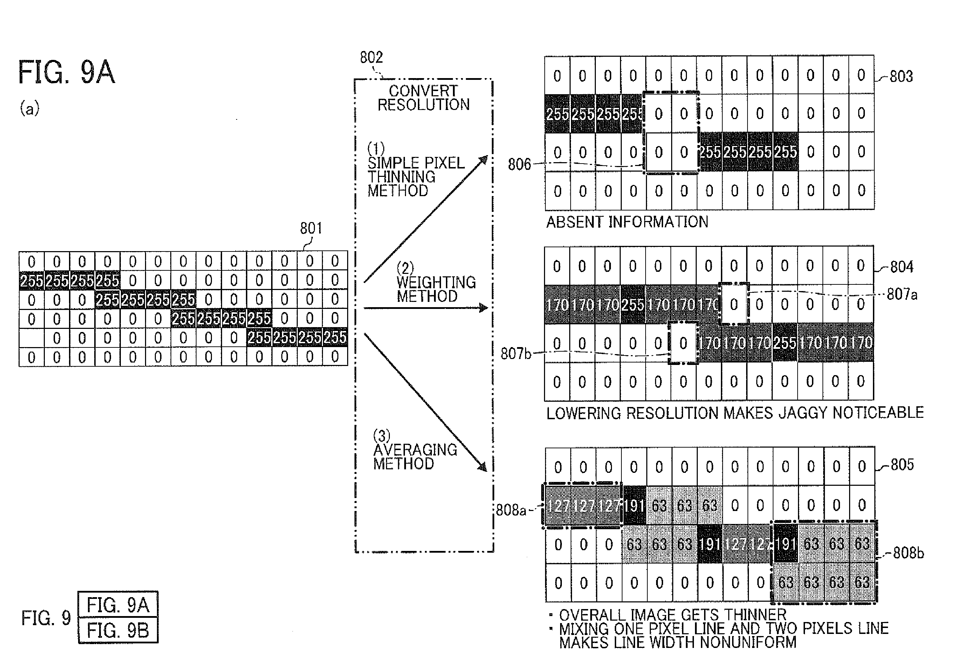

In particular, the following issues occur depending on the method of converting resolution in the case of converting high-resolution images into low-resolution images (e.g., conversion that halves the resolution). FIG. 9A(a) illustrates issues of the conventional technology. In FIG. 9A, reference numeral 801 is image data before converting resolution (0 is white pixel and 255 is black pixel) and reference numeral 802 denotes applied resolution-converting process ((1) is simple pixel thinning method, (2) is weighting method, and (3) is averaging method), 803 denotes image data resolution-converted by simple pixel thinning method (1), 804 denotes image data resolution-converted by weighting method (2), and 805 denotes image data resolution-converted by averaging method (3).

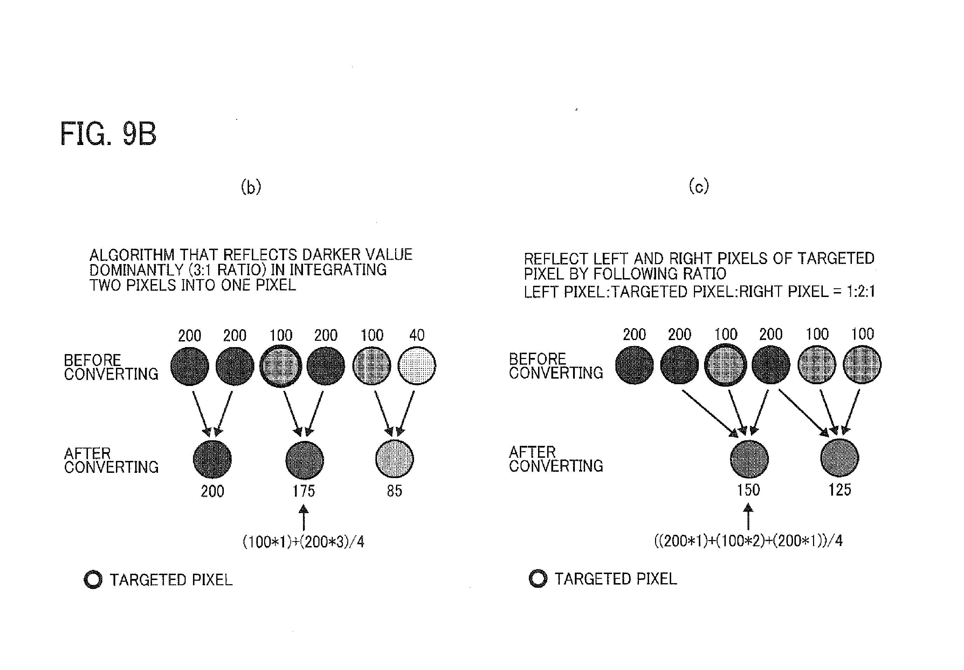

FIG. 9B(b) illustrates the weighting method. For example, in case of reducing the resolution by half (one pixel is made from two pixels), pixel value of targeted pixel is calculated by weighting pixel whose pixel value is large. FIG. 9B(c) illustrates the averaging method. Pixel value of targeted pixel is calculated by reflecting previous and next pixel of targeted pixel e.g. in a ratio of 1:2:1.

If the image data 801 is resolution-converted by the simple pixel thinning method (1), absence of image data 806 is generated in the image data after resolution-converting 803. If the image data 801 is resolution-converted by the weighting method (2), jagged edges 807a and 807b are generated in the image data after resolution-converting 804. If the image data 801 is resolution-converted by the averaging method (3), absence of darkness in image 808a and 808b is generated.

### BRIEF SUMMARY OF THE INVENTION

The present invention provides a novel image processing apparatus, image processing method, image forming apparatus, and storage medium storing a program that facilitates obtaining high-quality images even at low resolution without driving up costs and lowering speed.

More specifically, the present invention provides an image processing apparatus that converts an image with a first resolution into an image with a second resolution lower than the first resolution including a line width determining unit that determines whether or not line width in the image with the first resolution is a first line width, a resolution conversion unit that converts the image with the first resolution into the image with the second resolution, and a line width converting unit that converts the first line width in the image with the second resolution into a second line width wider than first line width if it is determined that the line width in the image with the first resolution is the first line width.

### BRIEF DESCRIPTION OF THE SEVERAL VIEWS OF THE DRAWINGS

A more complete appreciation of the disclosure and many of the attendant advantages thereof will be readily obtained as the same becomes better understood by reference to the following detailed description when considered in conjunction with the accompanying drawings.

FIG. 1 is a diagram illustrating a mechanical section of an inkjet recording apparatus as an embodiment of the present invention.

FIG. 2 is a block diagram illustrating a system and structure of an image processing apparatus as an embodiment of the present invention

FIG. 3 is a flowchart illustrating a process according to embodiments of the present invention.

FIG. 4 is a diagram illustrating a process according to as a first embodiment of the present invention.

FIG. 5 is a block diagram illustrating a structure of an image processing apparatus as a second embodiment of the present invention.

FIG. 6 is a diagram illustrating a process as a third embodiment of the present invention.

FIG. 7 is a diagram illustrating an example of a gradation correcting table as an embodiment of the present invention.

FIG. 8 is a block diagram illustrating an example of a structure implemented by software as an embodiment of the present invention.

FIG. 9A and FIG. 9B are diagrams illustrating issues of the conventional technology.

### DETAILED DESCRIPTION OF THE PREFERRED EMBODIMENTS

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner and achieve a similar result.

[First embodiment]

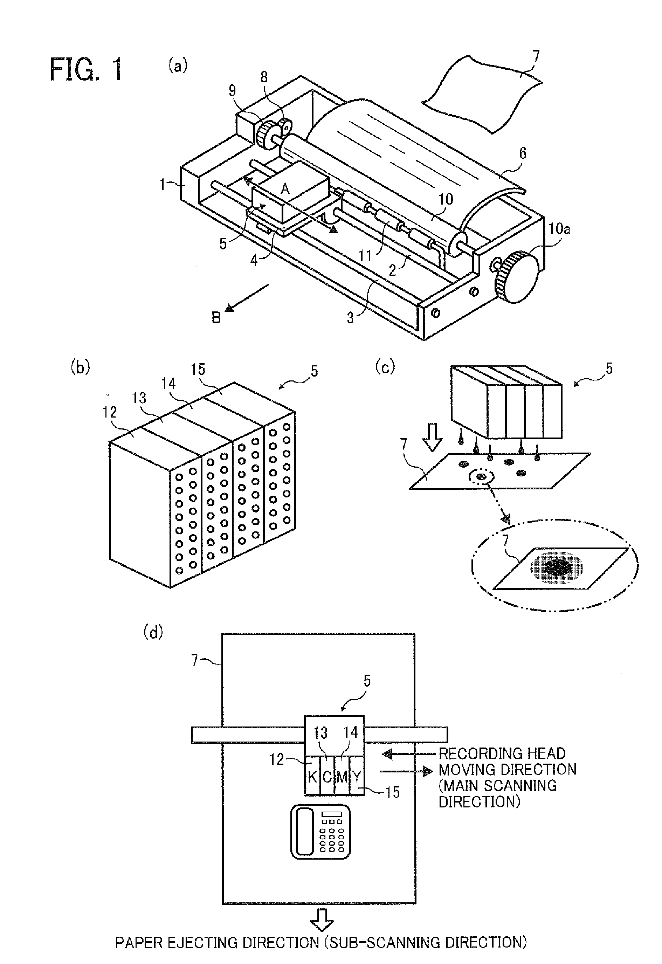

An embodiment of the present invention will be described in detail below with reference to the drawings. FIG. 1 (a) is a diagram illustrating a mechanical section of an inkjet recording apparatus in this embodiment. In FIG. 1 (a), a frame 1, guiderails 2 and 3, a carriage 4, a recording head 5, a guide board 6, a recording sheet 7, a drive gear 8, a sprocket gear 9, a platen 10, a feeding knob 10a, and pressure rollers 11 are illustrated.

In this inkjet recording apparatus, the carriage 4 is mounted movably on the guiderails 2 and 3 laid laterally across the frame 1, and the recording head 5 is mounted on the carriage 4. The carriage 4 can be movable in arrow A direction in FIG. 1 (a) by driving source such as a motor (not shown in figures), the platen 10 driven by driving source (not shown in figures) via the driving gear 8 and the sprocket gear 9 with the feeding knob 10a feeds the recording sheet set on the guide board 6, and the recording sheet 7 is carried to arrow B direction in FIG. 1 (a) by round of the platen 10 and the pressure rollers 11 that press the platen 10.

Also, in this inkjet recording apparatus, the recording sheet 7 is carried to the sub-scanning direction (direction B) as the recording head 5 moves to the main scanning direction (direction A), and an image is printed on the recording sheet 7 by ejecting ink drops from the recording head 5.

FIG. 1 (b) and (c) illustrate an example of the recording head 5 mounted on the inkjet recording apparatus shown in FIG. 1 (a). In FIG. 1 (b), the recording head 5 consists of ejecting units 12-15 corresponding to each color. Usually, the recording head 5 that unifies the ejecting units 12-15 records by ejecting ink drops to the surface of the sheet. These ejecting units 12-15 include a plurality of ink ejecting nozzles. Also, FIG. 1 (c) and (d) illustrates the status that drops ejected from the recording head 5 are recorded on the recording sheet 7.

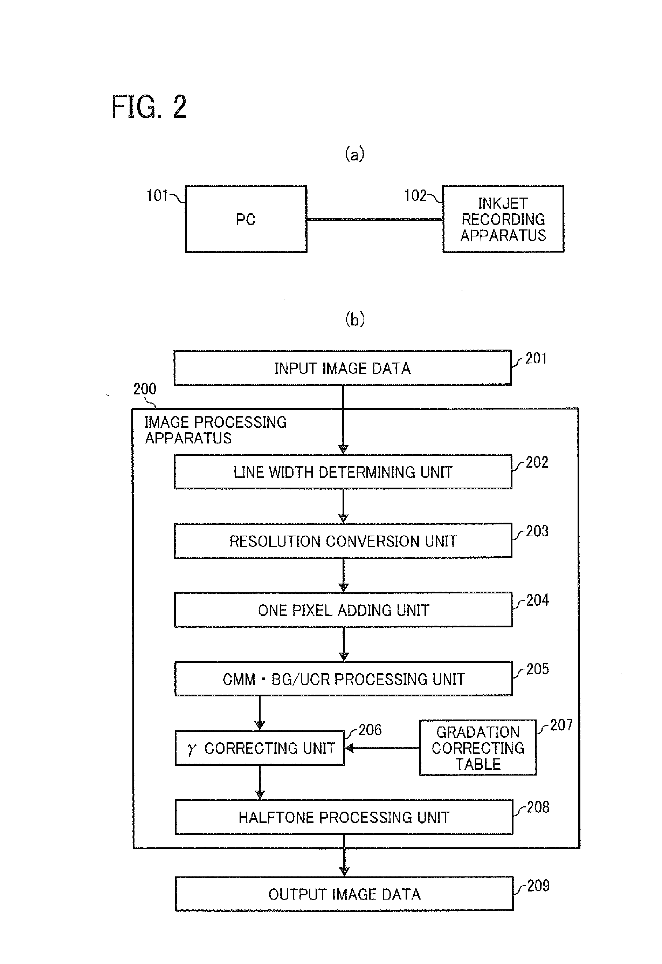

FIG. 2 is a diagram illustrating a whole system and a structure of an image processing apparatus in this embodiment. FIG. 2 (a) illustrates a personal computer (PC) 101 and an inkjet recording apparatus (image forming apparatus) 102, and the PC 101 and the inkjet recording apparatus 102 are connected via predefined interface and network.

FIG. 2 (b) illustrates a structure of an image forming apparatus 200 in this embodiment. In FIG. 2 (b), an input image data 201, a line width determining unit 202 that determines whether or not line width of the input image data is one pixel, a resolution conversion unit 203 that scales resolution of input image data in one-nth scale, an one pixel adding unit 204 that adds one pixel to line width in image converted to low resolution image, a CMM and BG/UCR processing unit 205 that executes CMM process that converts RGB signal into CMY signal, generates black (K signal), and eliminate undercolor, a γ correcting unit 206 that corrects gradation characteristic of the input image data with reference to a gradation correcting table, a gradation correcting table 207, a halftone processing unit 208 that executes dither processing and halftone processing on the input image data by using error diffusion, and an output image data 209 are illustrated. It should be noted that the resolution conversion unit 203 converts resolution of the input image data to resolution in accordance with nozzle density.

Image processing implemented by the image processing apparatus 200 of this embodiment can be implemented by either software processing by using a printer driver of the PC 101 or a controller of the inkjet recording apparatus 102.

Printing commands sent from application software executed on the PC 101 are processed by using a printer driver embedded in the PC 101 as software, and after rasterizing into recording dot pattern data, the data is transferred to the inkjet recording apparatus 102 and printed. Parameters for executing color converting process at the CMM processing unit 205 and γ correcting parameter for executing γ correcting at the γ correcting processing unit 206 are stored in memory such as ROM in a printer in case image-processing is executed in the printer. If γ correcting is executed by a printer driver in the PC 101, those parameters are stored in a storage device such as a hard disk in the PC 101.

In this embodiment, the PC 101 that includes a printer driver executes resolution-converting on input data, creates a resolution-compressed image, and executes γ correcting and halftone processing. Parameters used in those processes are stored in a storage device such as a hard disk, and the printer driver includes a resolution-converting algorithm for processing image data to be sent to the recording head 5 in accordance with nozzle density stored in the storage device. Also, the controller of the inkjet recording apparatus 102 can implement functions described above.

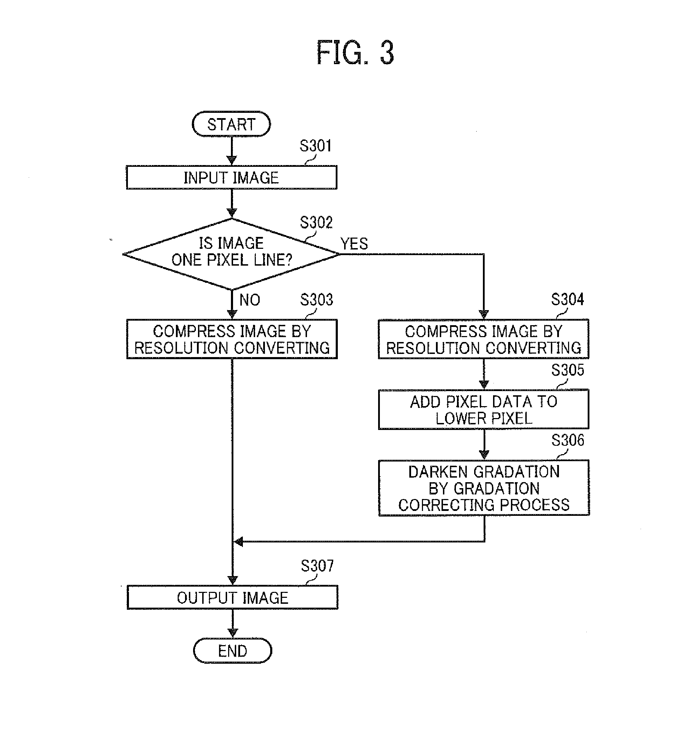

FIG. 3 is a flowchart illustrating this embodiment. In converting resolution, if there is a line with one pixel width in image before conversion, line width is widened by adding one pixel either above or below the line after conversion so that image data integrity is assured and jaggedness is eliminated so as not to lack image data.

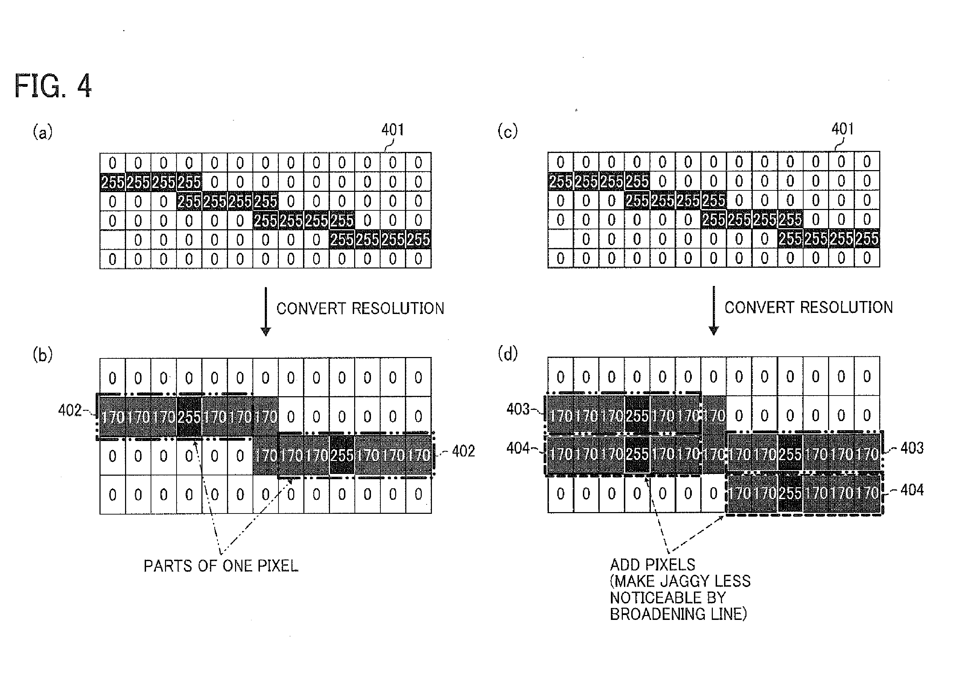

FIG. 4 is a diagram illustrating processing in the first embodiment of this invention. FIG. 4 (a) illustrates an input image and a line 401 (an oblique line) with one pixel width (pixel value is 255) is formed. FIG. 4 (b) illustrates an image after conversion, halving the resolution in the sub-scanning direction (up-and-down direction in FIG. 4 (b)) using weighting method. A line 402 (an oblique line) is formed with one pixel width after conversion too. However, aliasing of the line 402 gets noticeable due to low resolution in the sub-scanning direction. Even with line bleeding, noticeable jaggedness of line with one pixel cannot be improved.

FIG. 4 (c) illustrates an input image 401 in the same way as FIG. 4(a), and FIG. 4(d) illustrates a processed image in this embodiment. That is, in this embodiment, if there is a line with one pixel width in an image before conversion, one pixel 404 is added to a line 403 with one pixel width after conversion and the line 403 is converted to a line with two pixels width. Consequently, bleeding of the line increases due to the widened line, and that improves jaggedness. While one pixel 404 is added under the line with one pixel width 403 in the example described above, one pixel 404 can also be added above the line 403.

The line width determining unit 202 in FIG. 2 (b) determines whether or not a line with one pixel width exists in an image before converting resolution (FIG. 4 (c)) (S302). If there is no line with one pixel width (No in S302), the resolution conversion unit 203 scales resolution in the sub-scanning direction in one-nth (S303). Subsequently the CMM and BG/UCR processing unit 205 converts RGB signal into CMY signal, generates black (K signal), and eliminates undercolor. After the γ correction processing unit 206 corrects characteristic of CMYK gradation in image data, the halftone processing unit 208 converts to image data in binary or small values by using dithering or error diffusion and outputs the image (S307).

If a line with one pixel width exists (Yes in S302), the resolution conversion unit 203 scales resolution in the sub-scanning direction in one-nth (S304). The one pixel adding unit 204 adds one pixel 404 to the line with one pixel width 403 (FIG. 4 (d)) and converts the line to the line with two pixels width (S305). In this first embodiment, S306 is skipped and image is output by executing processes of the CMM and BG/UCR processing unit 205, γ correction processing unit 206, and the halftone processing unit 208 described above (S307).

The line width determining unit 202 determines line width by detecting status that there is no continuous pixel above and below targeted pixel in the sub-scanning direction. That is, after buffering above and below line of targeted pixel, the line width determining unit 202 determines whether or not pixel value exists in pixel above, below, and diagonal of the targeted pixel, and determines that the line is line with one pixel width if there is no pixel value in pixel above, below, and diagonal of the targeted pixel. Both multilevel image and binary image can be determined by using the method described above.

The one pixel adding unit 204 can execute adding one pixel process on both multilevel image and binary image. Regarding multilevel image, the one pixel adding unit 204 adds (copies) the same value of line data with one pixel width (usually the pixel consists of 8 bit in RGB) input from device such as PC to either above or below line of the targeted pixel line.

[Second embodiment]

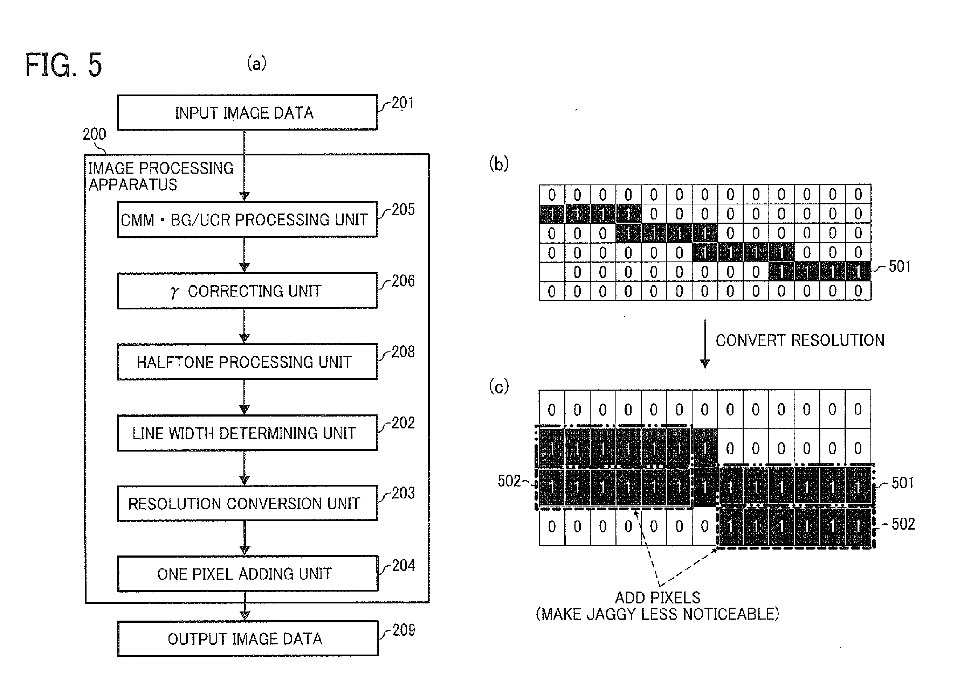

While resolution-converting process is executed on image data before halftone process in the first embodiment, resolution-converting process is executed on image data after halftone process in a second embodiment. FIG. 5 (a) is a diagram illustrating a structure of the image processing apparatus 200 in the second embodiment.

The line width determining unit 202 determines whether or not a line with one pixel width 501 exists in image after halftone process (binary image is shown in FIG. 5 (b)). If there is a line with one pixel width 501, the resolution conversion unit 203 scales resolution in the sub-scanning direction, and the one pixel adding unit 204 converts the line with one pixel width 501 into a line with two pixels width by adding one pixel 502 to the line with one pixel width 501 (FIG. 5 (c)). This improves jaggedness by making the line wide in the same way as the first embodiment.

[Third embodiment]

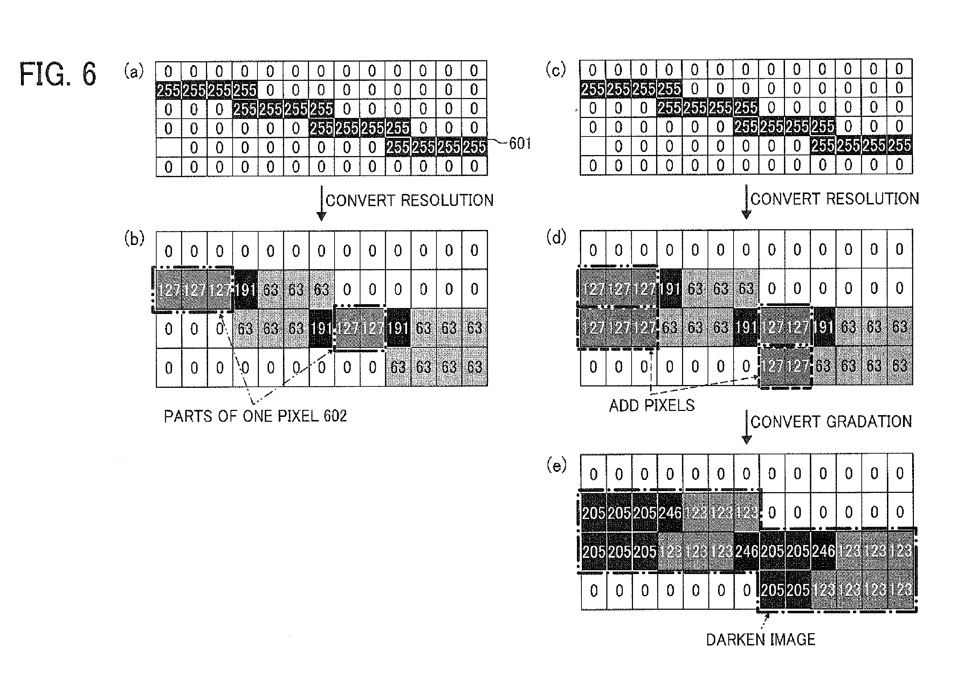

A third embodiment deals with reducing darkness of gradation after converting resolution. Image that includes a line with one pixel width 601 shown in FIG. 6 (a) is converted to image shown in FIG. 6 (b) by using averaging method. As shown in FIG. 6 (b), each pixel value in image after converting resolution becomes small value, and overall darkness of gradation gets lower. For example, pixel value of a pixel 255 before converting resolution falls to pixel value 127 at one pixel areas 602. Even if halftone process is executed with this image whose darkness of gradation gets lower, the output image process looks pale and out of focus.

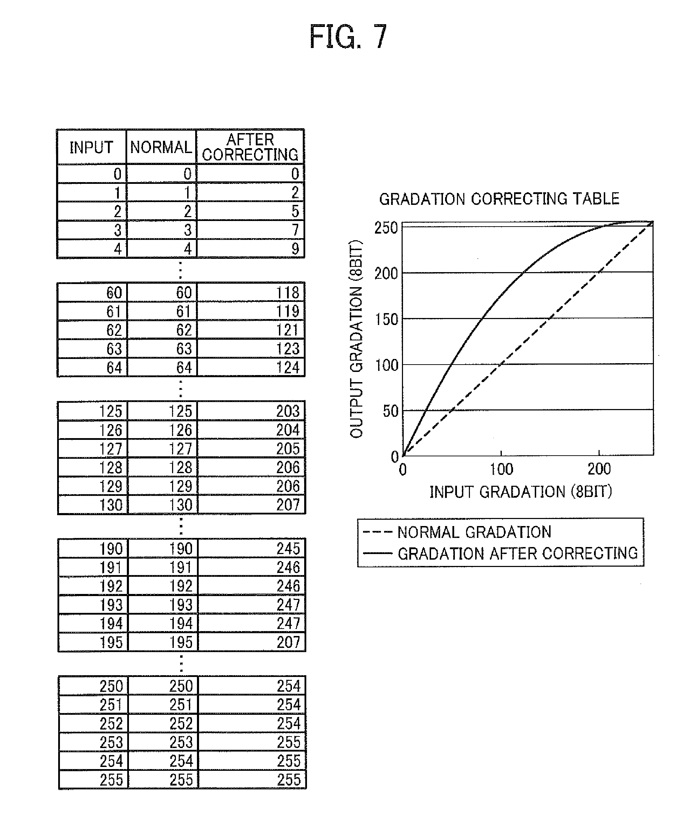

Consequently, in the third embodiment, gradation of image is corrected to make the image well-defined. That is, in the third embodiment, raising gradation value is performed on an image after converting resolution which lacks darkness, in particularly γ correcting process is executed. The γ correcting processing unit 206 corrects characteristic of gradation of CMYK image data with reference to a gradation correcting table shown in FIG. 7 (S306). FIG. 6 (c) illustrates image before converting resolution, and FIG. 6 (d) illustrates image after converting resolution. FIG. 6 (e) illustrates image after correcting gradation. For example, pixel value 127 in image after converting resolution is corrected in gradation to pixel value 255, pixel value 63 in image after converting resolution is corrected in gradation to pixel value 123. Consequently, lack of darkness in image is resolved, and sharp image can be available. As described above, sharp lines can be reproduced even after converting image into resolution of nozzle width in this embodiment. Also, while number of pixels is increased by copying targeted pixel and adding pixels (dots) as described above, the way of increasing pixels is not limited to this method. Furthermore, number of added pixels and dot size can be adjusted in accordance with line width and jaggedness. Consequently, thin lines such as lines with one pixel width can be printed in high quality even if the resolution is lowered.

[Fourth embodiment]

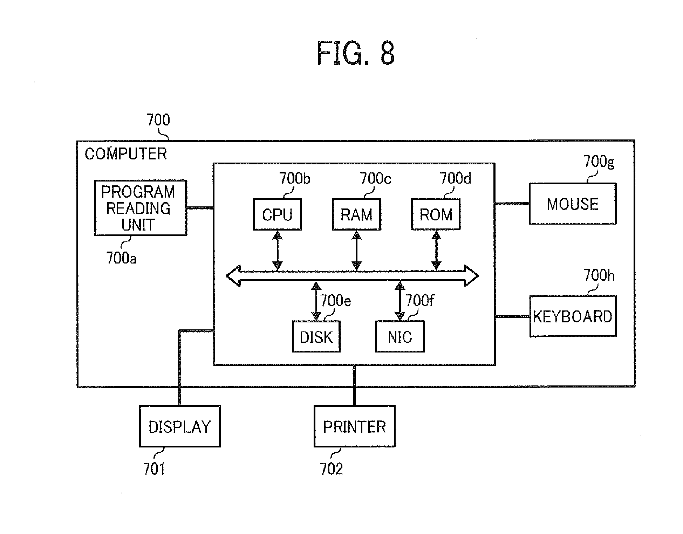

FIG. 8 is a diagram illustrating an example of a structure of an image processing system implemented by software in a fourth embodiment. A computer 700 includes a program reading unit 700a, a CPU 700b that controls the whole system, a RAM 700c which is used as a work area for the CPU 700b etc., a ROM 700d that stores control programs, etc. for the CPU 700b, a hard disk 700e, a network interface card (NIC) 700f, a mouse 700g, a keyboard 700h, a display 701 that displays image data and accepts inputting information by user operation, and an image forming apparatus 702 such as a color printer. This image processing system can be implemented by using workstations or PCs.

In this kind of configuration, the CPU 700b has functions of the line width determining unit, the resolution converting processing unit, the one pixel adding unit, the CMM and BG/UCR processing unit, the γ correcting unit, and the halftone processing unit shown in FIG. 1. Also, storage devices such as the RAM 700c, the ROM 700d, and the hard disk 700e can store the gradation correcting table and image data to be processed. It should be noted that processing functions executed by the CPU 700b can be provided as a software package, in particular data storage media such as CD-ROM and magnetic or magneto-optical disks. Therefore, a media driving unit (not shown in figures) that drives data storage media after setting the data storage media is set up in the embodiment shown in FIG. 8.

The image processing method of the invention can also be implemented by a general-purpose computer system that reads a program recorded in data storage media such as CD-ROM with peripheral devices such as a display and executes image processing with the CPU of the general-purpose computer system. In this case, a program for executing image processing of the invention, that is, the program used on hardware system, is provided in the status recorded on data storage media. Data storage media that stores programs, etc. is not limited to CD-ROM, and ROM, RAM, flash memory, and magneto-optical disk can be used as data storage media. Programs stored in data storage media can be installed on a storage device included in the hardware system such as the hard disk 700e, and the image processing function can be implemented by executing these programs. Also, programs for implementing image processing, etc. of the invention can be provided not only by data storage media but also from a server via network communication.

Numerous additional modifications and variations are possible in light of the above teachings. It is therefore to be understood that, within the scope of the appended claims, the disclosure of this patent specification may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

## Claims

1. An image processing apparatus (200) that converts an image with a first resolution into an image with a second resolution lower than the first resolution, comprising:
a line width determining unit (202) to determine whether or not a line width in the image with the first resolution is a first line width;
a resolution conversion unit (203) to convert the image with the first resolution into the image with the second resolution; and
a line width converting unit to convert the first line width in the image with the second resolution into a second line width wider than the first line width if it is determined that the line width in the image with the first resolution is the first line width.

2. The image processing apparatus (200) according to claim 1, wherein the line width determining unit (202) determines whether or not the first line width is one pixel, and the line width converting unit adds one pixel to the first line width and converts the first line width into the second line width if the line width determining unit (202) determines that the first line width is one pixel.

3. The image processing apparatus (200) according to claim 1, further comprising a correcting unit (206) to correct gradation of the image with the second resolution,
wherein the correcting unit (206) corrects the image with the second resolution so that gradation value of the image with the second resolution increases.

4. The image processing apparatus (200) according to claim 1 to 3, further comprising a halftone processing unit (208) to execute halftone processing on the image with the second resolution.

5. The image processing apparatus (200) according to claim 4, wherein the image with the first resolution is subjected to halftone processing by the halftone processing unit (208).

6. An image forming apparatus, comprising the image processing apparatus (200) according to claim 1 to 5.

7. An image processing method that converts an image with a first resolution into an image with a second resolution lower than the first resolution, comprising the steps of:
determining whether or not a line width in the image with the first resolution is a first line width;
converting the image with the first resolution into the image with the second resolution; and
converting the first line width in the image with the second resolution into a second line width wider than the first line width if it is determined that the line width in the image with the first resolution is the first line width.

8. A non-transitory computer-readable storage medium storing a program that, when executed by a computer, causes the computer to implement an image processing method that converts an image with a first resolution into an image with a second resolution lower than the first resolution,
the method comprising the steps of:
determining whether or not a line width in the image with the first resolution is a first line width;
converting the image with the first resolution into the image with the second resolution; and
converting the first line width in the image with the second resolution into a second line width wider than the first line width if it is determined that the line width in the image with the first resolution is the first line width.
